# EUROPÄISCHE PATENTSCHRIFT

(11) **EP 3 943 819 B1**
(45) Veröffentlichungstag und Bekanntmachung des Hinweises auf die Patenterteilung: **20.11.2024**
(21) Anmeldenummer: 21186338.6
(22) Anmeldetag: 19.07.2021
(51) Int. Cl.: F24D 3/08, F24D 11/00, F24D 17/00, F24F 11/00, F24F 12/00, F24F 110/10

(54) **WARMLUFT-BELÜFTUNGSSYSTEM MIT WÄRMERÜCKGEWINNUNG**
HOT AIR VENTILATION SYSTEM WITH HEAT RECOVERY
SYSTÈME DE VENTILATION À AIR CHAUD À RÉCUPÉRATION DE CHALEUR

(30) Priorität: 22.07.2020 DE 102020119369
(43) Veröffentlichungstag der Anmeldung: 26.01.2022
(73) Patentinhaber: Thesz, Georg, 83404 Ainring (DE)
(72) Erfinder: Thesz, Georg, 83404 Ainring (DE)
(74) Vertreter: Flach Bauer & Partner Patentanwälte mbB

(56) Entgegenhaltungen:
- EP-A1- 3 165 838
- EP-A2- 3 572 738
- DE-A1- 102014 226 355

## Beschreibung

Die Erfindung betrifft ein Warmluft-Belüftungssystem mit Wärmerückgewinnung gemäß dem Oberbegriff des Anspruchs 1.

Bekannte Warmluft-Belüftungssysteme dieser Art weisen eine Lüftungsvorrichtung zum Zuführen von erwärmter Zuluft zu einem Raum und zum Abführen von Abluft aus einem Raum auf, wobei die Lüftungsvorrichtung ein Lüftungsgerät mit einem Wärmetauscher umfasst, mit dem Wärmeenergie von der Abluft auf die Zuluft übertragbar ist. Mit Hilfe des Wärmetauschers wird der Abluft Wärme entzogen und zur Erwärmung der vom Lüftungsgerät angesaugten Frischluft beziehungsweise Außenluft verwendet.

Bei niedrigen Außentemperaturen unter 0° C besteht die Gefahr, dass das Lüftungsgerät vereist. Bekannte Lüftungsgeräte weisen daher im Frischlufteintrittsbereich eine Frostschutzeinrichtung in der Form einer elektrischen Vorheizung auf, mit der die Frischluft erwärmt wird, bevor sie zum Wärmetauscher gelangt. Dies hat jedoch den Nachteil, dass die Temperaturdifferenz im Wärmetauscher zwischen der Abluft und der Frischluft reduziert wird, so dass der Wirkungsgrad des Wärmetauschers herabgesetzt und die Wärmerückgewinnung verschlechtert wird. Weiterhin wird für die Vorheizung zusätzliche Energie benötigt.

Aus der DE 10 2014 226 355 A1 ist ein Warmluft-Belüftungssystem gemäß dem Oberbegriff des Anspruches 1 bekannt, bei dem aus einem Raum abströmende Abluft mittels eines Heizregisters erwärmt wird, bevor die Abluft in den Wärmetauscher gelangt. Durch diese Aufwärmung soll die Abluft im Wärmetauscher nicht mehr auf so tiefe Fortlufttemperaturen heruntergekühlt werden, wie dies ohne Abluft-Heizregister der Fall wäre. Hierdurch wird weniger Kondensat erzeugt und die Einfrierneigung reduziert, so dass der Frostschutz verbessert wird.

Aus der EP 3 572 738 A2 ist es bekannt, in einer Abluftleitung einen Wärmetauscher vorzusehen, um die Abluft vor ihrem Eintritt in ein Wärmerückgewinnungssystem anzuwärmen. Die dem Wärmetauscher zugeführte Wärme wird dort von einem Wärmespeicher geliefert, der beispielsweise mit einer Wasser-Glykol-Mischung gefüllt ist.

Aus der EP 3 165 838 A1 ist ein Belüftungssystem bekannt bei dem ein Wärmetauscher in einer Zuluftleitung angeordnet ist, um die Zuluft zu erwärmen.

Der Erfindung liegt die Aufgabe zugrunde, ein Warmluft-Belüftungssystem der eingangs genannten Art zu schaffen, das eine verbesserte Wärmerückgewinnung aufweist und möglichst kostengünstig zu betreiben ist.

Diese Aufgabe wird erfindungsgemäß durch ein Warmluft-Belüftungssystem mit den Merkmalen des Anspruchs 1 gelöst. Vorteilhafte Ausführungsformen der Erfindung sind in den weiteren Ansprüchen beschrieben.

Beim erfindungsgemäßen Warmluft-Belüftungssystem mit Wärmerückgewinnung weist die Brauchwasser-Erwärmungseinheit einen Brauchwasser-Wärmetauscher zur Übertragung von Wärmeenergie eines im Brauchwasserspeicher vorhandenen Brauchwassers auf ein durch den Brauchwasser-Wärmetauscher hindurchfließendes Fluid auf, wobei das erwärmte Fluid vom Brauchwasser-Wärmetauscher zur Abluft-Heizeinrichtung weitergeleitet wird, so dass die Abluft-Heizeinrichtung mittels des erwärmten Fluids beheizbar ist.

Dadurch, dass die aus einem Raum abgeführte Abluft erwärmt wird, bevor die Abluft den Wärmetauscher erreicht, wird die Temperaturdifferenz im Wärmetauscher zwischen der Abluft und der Frischluft erhöht. Die Wärmerückgewinnung kann daher aus einer höheren Ablufttemperatur erfolgen und effizienter als bei einer niedrigeren Temperaturdifferenz durchgeführt werden. Weiterhin kann bei ordnungsgemäßem Betrieb des Warmluft-Belüftungssystems auch bei sehr kalten Außentemperaturen auf eine Vorheizung der Frischluft verzichtet werden, da die aus dem Lüftungsgerät austretende Abluft (Fortluft) ohne weiteres auf einer Temperatur über 0°C gehalten werden kann. Der Wirkungsgrad des gesamten Warmluft-Belüftungssystems wird verbessert.

Durch die Kombination der Lüftungsvorrichtung mit der Brauchwasser-Erwärmungseinheit wird ein besonders wirtschaftlich arbeitendes Warmluft-Belüftungssystem geschaffen, bei dem die zur Erwärmung der Abluft-Heizeinrichtung erforderliche Wärmeenergie dem Brauchwasserspeicher entnommen wird. Als Fluid wird vorzugsweise Wasser verwendet. Da das Fluid in einem geschlossenen Kreislauf zwischen dem Brauchwasserspeicher und der Abluft-Heizeinrichtung fließt, ist es jedoch auch ohne weiteres möglich, Zusätze zum Wasser wie Korrosionsinhibitoren oder andere Fluide zu verwenden, die eine besonders gute Wärmeübertragung und lange Lebensdauer der einzelnen Komponenten gewährleisten.

Vorzugsweise umfasst die Abluft-Heizeinrichtung ein Warmwasser-Heizregister. Ein derartiges, mit Warmwasser betriebenes Heizregister benötigt keinen Frostschutz, so dass auf Frostschutzmittel verzichtet werden kann. Vorzugsweise weist das Lüftungsgerät ein den Wärmetauscher enthaltendes Lüftungsgehäuse mit einem Abluft-Eingangsanschluss und einem Abluft-Ausgangsanschluss auf. Die Brauchwasser-Erwärmungseinheit umfasst dabei eine Brauchwasser-Wärmepumpe, wobei die über den Abluft-Ausgangsanschluss aus dem Lüftungsgerät austretende Abluft zur Brauchwasser-Wärmepumpe geleitet wird, so dass der Brauchwasserspeicher mittels Wärmeenergie der Abluft beheizbar ist.

Ein derartiges Warmluft-Belüftungssystem weist einen besonders hohen Wirkungsgrad auf, da die Rest-Wärmeenergie der aus dem Lüftungsgerät austretenden Abluft ausgenutzt wird, um mittels der Brauchwasser-Wärmepumpe das Brauchwasser zu erwärmen und dadurch die notwendige Wärmeenergie zur Erwärmung der Abluft-Heizeinrichtung bereitzustellen.

Vorzugsweise ist die Abluft-Heizeinrichtung außerhalb des Lüftungsgerätes angeordnet und weist einen Abluft-Ausgang auf, der an den Abluft-Eingangsanschluss des Lüftungsgeräts angeschlossen ist. Hierdurch können Lüftungsgerät und Abluft-Heizeinrichtung separat hergestellt und auf einfache Weise nachträglich montiert werden.

Vorzugsweise weist die Lüftungsvorrichtung ein die Temperatur der aus dem Lüftungsgerät austretenden Abluft messendes Regelthermostat zur Temperaturregelung des der Abluft-Heizeinrichtung zugeführten Fluids auf, wobei das Regelthermostat mit einem Mischventil zum Mischen des der Abluft-Heizeinrichtung zugeführten Fluids und des von der Abluft-Heizeinrichtung abgeführten Fluids zusammenwirken. Mittels des Mischventils wird somit die Vorlauftemperatur der Abluft-Heizeinrichtung dadurch geregelt, dass mehr oder weniger kaltes Fluid, insbesondere Wasser, dem sich in der Vorlaufleitung befindenden warmen Fluid zugemischt wird. Alternative Verfahren zur Regelung der Temperatur der Abluft-Heizeinrichtung sind ohne weiteres möglich, beispielsweise eine gepulste Fluidzuführung, d. h. eine Fluidzuführung in bestimmten, variablen Zeitintervallen.

Vorzugsweise weist die Lüftungsvorrichtung eine Frischluft-Vorheizung und ein die Temperatur der aus dem Lüftungsgerät austretenden Abluft messendes Sicherheitsthermostat auf, das die Frischluft-Vorheizung aktiviert, wenn die aus dem Lüftungsgerät austretende Abluft eine Mindesttemperatur unterschreitet. Bei der Frischluft-Vorheizung handelt es sich vorzugsweise um eine elektrische Heizeinrichtung. Die Frischluft-Vorheizung tritt dann in Aktion, wenn entweder die Abluft-Heizeinrichtung die Abluft nicht genügend erwärmt, um eine Vereisung des Lüftungsgeräts auszuschließen, oder wenn die Abluft-Heizeinrichtung defekt ist. Hierdurch wird eine zusätzliche Sicherheit vor Vereisung des Lüftungsgeräts geschaffen.

Vorzugsweise umfasst die Lüftungsvorrichtung eine Notausschalteinrichtung, welche einen Notausschalt-Thermostaten aufweist, der die Temperatur der aus dem Lüftungsgerät austretenden Abluft misst und die Lüftungsvorrichtung abschaltet, wenn die aus dem Lüftungsgerät austretende Abluft eine Mindesttemperatur unterschreitet und dabei die Abluft-Heizeinrichtung und/oder Frischluft-Vorheizung nicht aktiviert wird. Hierdurch wird eine weitere Sicherheit vor Vereisung des Lüftungsgeräts geschaffen.

Vorzugsweise sind die Abluft-Heizeinrichtung, das Lüftungsgerät und die Brauchwasser-Erwärmungseinheit in einem gemeinsamen Gehäuse angeordnet. Dies ermöglicht eine optimale werkseitige Montage der entsprechenden Komponenten, so dass der nachträgliche baustellenseitige Montageaufwand reduziert wird. Weiterhin kann hierdurch eine optisch ansprechende Einheit geschaffen werden.

Vorzugsweise ist im Lüftungsgerät eine Wärmepumpe angeordnet, die einen Verdampfer, einen Kompressor und einen Kondensator umfasst und zur Erhöhung der Temperatur der Zuluft durch Entnahme von Wärmeenergie aus der Abluft ausgebildet ist, wobei der Verdampfer in Strömungsrichtung der Abluft nach dem Wärmetauscher und der Kondensator in Strömungsrichtung der Zuluft nach dem Wärmetauscher angeordnet sind. Hierdurch kann im Lüftungsgerät der Abluft weitere Wärme entzogen werden, die für die Erhöhung der Temperatur der Zuluft verwendet werden kann.

Vorzugsweise ist in Strömungsrichtung der Abluft vor der Abluft-Heizeinrichtung ein Filter angeordnet, der zur Reinigung der Abluft vor ihrem Eintritt in die Abluft-Heizeinrichtung ausgebildet ist. Hierdurch kann die Abluft-Heizeinrichtung zuverlässig vor Verschmutzung, beispielsweise durch Hausstaub, geschützt werden.

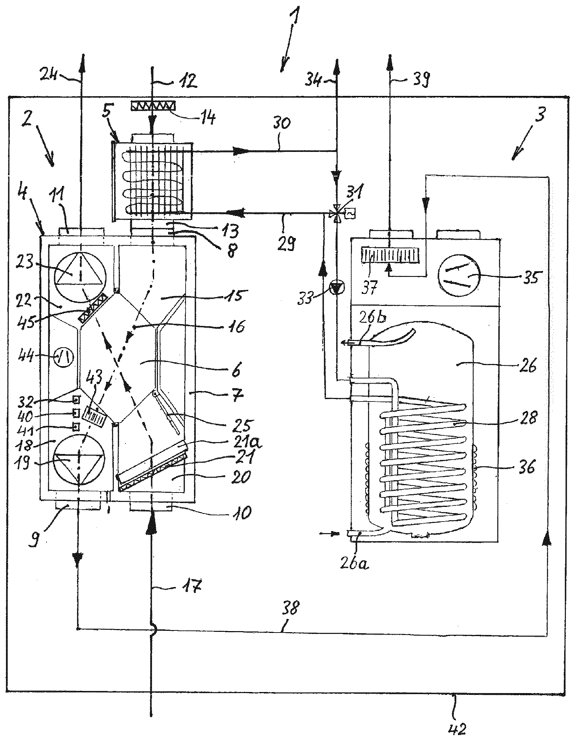

Die Erfindung wird nachfolgend anhand der Zeichnung beispielhaft näher erläutert. Die Zeichnung zeigt in schematischer Darstellung ein vorteilhaftes Ausführungsbeispiel des erfindungsgemäßen Warmluft-Belüftungssystems.

Das Warmluft-Belüftungssystem 1 des dargestellten Ausführungsbeispiels umfasst eine Lüftungsvorrichtung 2, die in der linken Hälfte der Zeichnung dargestellt ist, sowie eine Brauchwasser-Erwärmungseinheit 3, die in der rechten Hälfte der Zeichnung dargestellt ist.

Die Lüftungsvorrichtung 2 umfasst ein Lüftungsgerät 4 und eine Abluft-Heizeinrichtung 5, mit der die aus einem Raum abgeführte Abluft erwärmt werden kann, bevor sie einem Wärmetauscher 6 zugeführt wird, der sich im Lüftungsgerät 4 befindet.

Das Lüftungsgerät 4 weist ein Lüftungsgehäuse 7 mit einem Abluft-Eingangsanschluss 8, einem Abluft-Ausgangsanschluss 9, einem Frischluft-Eingangsanschluss 10 und einem Zuluft-Ausgangsanschluss 11 auf.

Die aus einem Raum abgeführte Abluft durchströmt zunächst entsprechend dem Pfeil 12 einen Filter 14. Beim Filter 14 kann es sich um einen üblichen Staubfilter, insbesondere Feinstaubfilter, handeln. Zusätzlich oder alternativ ist es auch möglich, einen Pollenfilter oder Aktivkohlefilter einzusetzen. Der Filter 14 hat die Aufgabe, die Abluft-Heizeinrichtung 5 vor Verschmutzung durch Hausstaub oder andere Verunreinigungen zu schützen.

Nach Durchströmen des Filters 14 durchströmt die Abluft die Abluft-Heizeinrichtung 5, wird dort erwärmt und gelangt zu einem Abluft-Ausgang 13 der Abluft-Heizeinrichtung 5. Dieser ist an den Abluft-Eingangsanschluss 8 des Lüftungsgeräts 4 angeschlossen.

Die Abluft strömt über den Abluft-Eingangsanschluss 8 in einen Abluft-Eingangsabschnitt 15 des Lüftungsgeräts 4 und durchströmt entsprechend der strichpunktierten Linie 16 den Wärmetauscher 6, bei dem es sich beispielsweise um einen nach dem Kreuzstrom- und/oder Gegenstromprinzip arbeitenden Plattenwärmetauscher handeln kann. Im Wärmetauscher 6 wird Wärmeenergie der Abluft auf Frischluft übertragen, die entsprechend dem Pfeil 17 über den Frischluft-Eingangsanschluss 10 in das Lüftungsgerät 4 eingeführt wird. Im Wärmetauscher 6 wird somit der Abluft Wärme entzogen, die zum Erwärmen der Frischluft verwendet wird.

Vom Wärmetauscher 6 gelangt die Abluft zu einem Abluft-Ausgangsabschnitt 18 des Lüftungsgeräts 4, in dem sich ein Abluftventilator 19 befindet. Der Abluftventilator 19 sorgt für das Absaugen der Abluft aus dem zu entlüftenden Raum und für den Transport der Abluft durch das Lüftungsgerät 4 hindurch. Vom Abluft-Ausgangsabschnitt 18 strömt die Abluft zum Abluft-Ausgangsanschluss 9, über den die Abluft das Lüftungsgerät 4 verlässt.

Über eine optional im Lüftungsgerät 4 vorgesehene Wärmepumpe kann der Abluft nach Durchströmen des Wärmetauschers 6 zusätzliche Wärmeenergie entzogen werden, die zur Erwärmung der Zuluft verwendet werden kann. Diese optionale Wärmepumpe umfasst einen nach dem Wärmetauscher 6 angeordneten, von der Abluft angeströmten Verdampfer 43, einen Kompressor 44 und einen von der Zuluft angeströmten Kondensator 45, der in Strömungsrichtung der Zuluft nach dem Wärmetauscher 6 angeordnet ist. Ein zirkulierendes Wärmepumpenfluid dieser Wärmepumpe, dessen Kreislauf nicht dargestellt ist, wird im Verdampfer 43 durch die in der Abluft noch vorhandene Wärmeenergie erwärmt, wobei es verdampft. Durch den Kompressor 44 wird das nunmehr gasförmige Wärmepumpenfluid verdichtet und dadurch weiter erwärmt. Im Kondensator 45 gibt das erwärmte Wärmepumpenfluid seine Wärmeenergie an die Zuluft ab, wobei es kondensiert. Das flüssige, kalte Wärmepumpenfluid strömt dann vom Kondensator 45 zurück zum Verdampfer 43. Vorzugsweise ist diese Wärmepumpe innerhalb des Lüftungsgehäuses 7 angeordnet.

Die über den Frischluft-Eingangsanschluss 10 in das Lüftungsgerät 4 eintretende Frischluft bzw. Außenluft gelangt zunächst in einen Frischluft-Eingangsabschnitt 20 und durchströmt einen dort angeordneten Filter 21, bei dem es sich wiederum um einen Feinstaubfilter handeln kann. Zusätzlich kann im Frischluft-Eingangsabschnitt 20 ein weiterer Filter 21a angeordnet sein, bei dem es sich beispielsweise um einen Pollenfilter oder Aktivkohlefilter handeln kann. Beim anschließenden Durchströmen des Wärmetauschers 6 wird die Frischluft mittels der Wärmeenergie der Abluft auf eine Temperatur erwärmt, die zur Beheizung eines Raums geeignet ist. Diese erwärmte Frischluft wird als Zuluft bezeichnet.

Nach dem Durchströmen des Wärmetauschers 6 gelangt die Zuluft in einen Zuluft-Ausgangsabschnitt 22, in dem sich ein Zuluftventilator 23 befindet. Der Zuluftventilator 23 besorgt das Ansaugen der Frischluft entsprechend dem Pfeil 17 in das Lüftungsgerät 4 und den Transport der Frischluft bzw. Zuluft durch das Lüftungsgerät 4 hindurch. Vom Zuluft-Ausgangsabschnitt 22 strömt die erwärmte Zuluft entsprechend dem Pfeil 24 über den Zuluft-Ausgangsanschluss 11 zu dem zu belüfteten bzw. zu beheizenden Raum.

Der optional vorhandene Kondensator 45 ist vorzugsweise im Zuluft-Ausgangsabschnitt 22 zwischen dem Wärmetauscher 6 und dem Zuluftventilator 23 angeordnet.

Eine schwenkbare Bypassklappe 25, die zwischen dem Frischluft-Eingangsabschnitt 20 und dem Wärmetauscher 6 angeordnet ist, ermöglicht das wahlweise Öffnen und Sperren des Frischluftstroms.

Im dargestellten Ausführungsbeispiel umfasst die Abluft-Heizeinrichtung 5 ein Warmwasser-Heizregister, das mittels warmem Wasser geheizt wird. Die hierfür benötigte Wärmeenergie wird von der Brauchwasser-Erwärmungseinheit 3 geliefert, wie im Folgenden erläutert wird.

Die Brauchwasser-Erwärmungseinheit 3 umfasst einen Brauchwasserspeicher 26 mit einem Kaltwasserzulauf 26a und einem Warmwasserablauf 26b. Innerhalb des Brauchwasserspeichers 26 ist ein Brauchwasser-Wärmetauscher 28 angeordnet. Ein innerhalb des Brauchwasser-Wärmetauschers 28 strömendes Fluid, vorzugsweise Wasser, wird über das heiße Wasser im Brauchwasserspeicher 26 aufgeheizt. Das aufgeheizte Fluid strömt in einem vorzugsweise geschlossenen Kreislauf über eine Vorlaufleitung 29 zur Abluft-Heizeinrichtung 5, gibt dort über das Warmwasser-Heizregister Wärmeenergie an die Abluft ab, wodurch diese erwärmt wird, und strömt in einem abgekühlten Zustand über eine Rücklaufleitung 30 zum Brauchwasser-Wärmetauscher 28 zurück, um dort wieder aufgeheizt zu werden.

Die Vorlaufleitung 29 und die Rücklaufleitung 30 sind über ein elektronisch gesteuertes Mischventil 31 miteinander verbunden. Auf diese Weise kann das heiße Fluid der Vorlaufleitung 29 mit dem abgekühlten Fluid der Rücklaufleitung 30 laufend derart gemischt werden, dass die gewünschte Heiztemperatur in der Abluft-Heizeinrichtung 5 erreicht wird. Die Regelung der Heiztemperatur bzw. die Ansteuerung des Mischventils 31 erfolgt über ein Regelthermostat 32, das im Abluft-Ausgangsabschnitt 18 des Lüftungsgeräts 4 angeordnet ist und die Temperatur der Abluft misst. Andere Regelungen der Heiztemperatur sind ohne weiteres möglich, beispielsweise ein Öffnen und Schließen der Vorlaufleitung 29 in bestimmten Zeitintervallen.

Die Förderung des Fluids erfolgt über eine Umwälzpumpe 33, die vorzugsweise in der Rücklaufleitung 30 angeordnet ist. Der Heizkreis weist eine durch dem Pfeil 34 angedeutete Entlüftung auf.

Die Brauchwasser-Erwärmungseinheit 3 weist ferner eine Wärmepumpe auf, die einen Kompressor 35, einen Kondensator 36 und einen Verdampfer 37 umfasst. Mithilfe dieser Wärmepumpe kann die Rest-Wärmeenergie der aus dem Lüftungsgerät 4 austretenden Abluft ausgenutzt werden, um den Brauchwasserspeicher 26 zu beheizen.

Zu diesem Zweck wird die über den Abluft-Ausgangsanschluss 9 des Lüftungsgeräts 4 austretende Abluft mittels einer Leitung 38 über den Verdampfer 37 der Brauchwasser-Erwärmungseinheit 3 geleitet, wo die Rest-Wärmeenergie der Abluft auf ein zirkulierendes Wärmepumpenfluid übertragen und dieses damit erwärmt und verdampft wird. Der Kreislauf des Wärmepumpenfluids ist nicht näher dargestellt. Über den Kompressor 35 wird das Wärmepumpenfluid verdichtet und weiter erwärmt. Anschließend wird das erwärmte, gasförmige Wärmepumpenfluid zum Kondensator 36 geleitet, der den Brauchwasserspeicher 26 umgibt und beispielsweise als Rollrohrheizelement ausgebildet sein kann. Der Kondensator 36 gibt die Wärmeenergie des heißen Wärmepumpenfluids an das im Brauchwasserspeicher 26 vorhandene Brauchwasser ab, wobei das Wärmepumpenfluid kondensiert und abkühlt, während das Brauchwasser aufgeheizt wird. Vom Kondensator 36 strömt das entwärmte Wärmepumpenfluid wieder zurück zum Verdampfer 37.

Die Abluft verlässt nach Durchströmen des Verdampfers 37 als stark abgekühlte Fortluft die Brauchwasser-Erwärmungseinheit 3, wie durch den Pfeil 39 angedeutet.

Bei Lüftungsgeräten, die mit Wärmerückgewinnung arbeiten, besteht das grundsätzliche Problem, dass es im Ausgangsbereich des Wärmetauschers zu einer Vereisung kommen kann, wenn die Abluft nach dem Wärmetauscher eine Temperatur von unter 3°C aufweist. Dadurch, dass das erfindungsgemäße Warmluft-Belüftungssystem 1 eine Abluft-Heizeinrichtung 5 aufweist, welche die Abluft vor dem Durchströmen des Wärmetauschers 6 erwärmt, steht im Wärmetauscher 6 jedoch ein derart hoher Temperaturgradient zwischen Abluft und Frischluft zur Verfügung, dass die aus dem Wärmetauscher 6 austretende Abluft ohne weiteres über 3°C gehalten werden kann, wodurch eine Vereisung ausgeschlossen wird. Hierzu ist es nicht erforderlich, die Frischluft mittels einer Frischluft-Vorheizung zu erwärmen.

Aus Sicherheitsgründen ist es jedoch möglich, im Bereich des Frischluft-Eingangsabschnitts 20 eine zusätzliche elektrische Frischluft-Vorheizung vorzusehen. Diese Frischluft-Vorheizung kann über ein Sicherheitsthermostat 40 angesteuert werden, das die Abluft im Abluft-Ausgangsabschnitt 18 misst und die Frischluft-Vorheizung aktiviert, wenn die Abluft nach dem Wärmetauscher 6 eine bestimmte Mindesttemperatur, beispielsweise 2°C, unterschreitet. Dies kann beispielsweise der Fall sein, wenn die Abluft-Heizeinrichtung 5 bei sehr kalten Außentemperaturen nicht ausreichend beheizt wird oder die Abluft-Heizeinrichtung 5 ausfällt.

Weiterhin kann die Lüftungsvorrichtung 2 eine Notausschalteinrichtung umfassen, welche einen Notausschalt-Thermostaten 41 umfasst, der ebenfalls die Temperatur der Abluft nach dem Wärmetauscher 6 misst. Mithilfe dieser Notausschalteinrichtung ist es möglich, die Lüftungsvorrichtung 2 abzuschalten, wenn die Abluft-Heizeinrichtung 5 und/oder Frischluft-Vorheizung defekt sind und die Abluft nach dem Wärmetauscher 6 eine bestimmte Mindesttemperatur, beispielsweise 1°C, unterschreitet.

Die Vorteile des erfindungsgemäßen Warmluft-Belüftungssystems 1 werden anhand der nachfolgenden Tabelle ersichtlich, aus der die Temperaturen ersichtlich sind, die bei zwei Lüftungsvorrichtungen gemäß dem Stand der Technik (ohne und mit einer elektrischen Frischluft-Vorheizung als Frostschutz) und einer erfindungsgemäßen Lüftungsvorrichtung mit Abluft-Heizeinrichtung (ohne optionale Wärmepumpe im Lüftungsgerät 4) an verschiedenen Stellen der Lüftungsvorrichtungen auftreten. Die angegebenen Temperaturen ergeben sich bei trockener Luft.

| | Vergleichsbeispiel 1: Stand der Technik ohne Frostschutz | Vergleichsbeispiel 2: Stand der Technik mit Frostschutz am Lüftereingang | Erfindung (mit Abluft-Heizeinrichtung) |
|---|---|---|---|
| T. der Frischluft (Außenluft) | -16°C | -16°C | -16°C |
| T. der Frischluft am Eingang Wärmetauscher | -16°C | 4°C | -16°C |
| T. der Abluft aus Raum | 21°C | 21°C | 21°C |
| T. der Abluft am Eingang Wärmetauscher | 21°C | 21°C | 41°C |
| T. der Zuluft am Ausgang Wärmetauscher | 16,9°C | 18,4°C | 36,2°C |
| T. der Abluft am Ausgang Wärmetauscher | -4,2°C | 9,8°C | 10,2°C |

Wie aus der obigen Tabelle ersichtlich, wurde bei allen drei Lüftungsvorrichtungen von gleichen Ausgangsbedingungen ausgegangen, nämlich von einer Außen- bzw. Frischlufttemperatur von -16°C und einer Ablufttemperatur einer aus einem Raum abzuführenden Abluft von 21°C. Die Lüftungsgeräte der beiden Vergleichsbeispiele entsprechend dem Lüftungsgerät 4 der vorliegenden Erfindung, weisen jedoch keine Abluft-Heizeinrichtung 5 auf.

Vergleichsbeispiel 1 zeigt die Temperaturen bei einem Lüftungsgerät gemäß dem Stand der Technik ohne Frostschutz, d. h. ohne Frischluft-Vorheizung. Um eine Zulufttemperatur von nur 16,9°C zu erreichen, wird der Abluft im Wärmetauscher so viel Wärmeenergie entzogen, dass die Abluft am Ausgang des Wärmetauschers auf -4,2°C abkühlt und daher eine hohe Vereisungsgefahr besteht.

Vergleichsbeispiel 2 zeigt die Temperaturen bei einem Lüftungsgerät gemäß dem Stand der Technik, bei dem im Bereich des Frischlufteingangs des Lüftungsgeräts eine elektrische Vorheizung vorgesehen ist, welche die Außenluft auf 4°C erwärmt. Zwar beträgt die Ausgangstemperatur am Wärmetauscher 9,8°C, wodurch eine Vereisung verhindert wird, jedoch beträgt die im Wärmetauscher herrschende Temperaturdifferenz zwischen der Abluft (21°C) und der zugeführten Frischluft (4°C), die für die Wärmerückgewinnung zur Verfügung steht, aufgrund der Frischluft-Vorheizung nur noch 17°C, so dass die Zuluft nur auf 18,4° C erwärmt werden kann.

Bei der erfindungsgemäßen Lüftungsvorrichtung 2 wird die Abluft, bevor sie in den Wärmetauscher 6 eintritt, von 21°C auf 41°C erwärmt. Die Temperatur der Frischluft am Eingang des Wärmetauschers 6 beträgt -16°C. Die im Wärmetauscher herrschende Temperaturdifferenz zwischen der Abluft und der zugeführten Frischluft, die für die Wärmerückgewinnung zur Verfügung steht, beträgt somit 57°C. Hiermit kann die dem Raum zuzuführende Frischluft auf 36,2°C erwärmt werden. Gleichzeitig beträgt die Temperatur am Ausgang des Wärmetauschers 6 noch immer 10,2°C, so dass eine Vereisungsgefahr wirkungsvoll verhindert wird, obwohl am Eingang des Lüftungsgeräts 4 keine Frischluft-Vorheizung vorhanden ist.

Wie anhand der Zeichnung beschrieben, kann die Restwärme der Abluft, die das Lüftungsgerät 4 verlässt, über eine Brauchwasser-Wärmepumpe zum Beheizen des Brauchwasserspeichers 26 und damit auch wieder für die Beheizung der Abluft-Heizeinrichtung 5 verwendet werden. Die Kombination der Lüftungsvorrichtung 2 mit der Brauchwasser-Erwärmungseinheit 3 ist jedoch optional. Die Erfindung umfasst auch Warmluft-Belüftungssysteme 1 ohne eine Brauchwasser-Erwärmungseinheit 3, bei denen die Abluft-Heizeinrichtung 5 auf andere Weise, beispielsweise elektrisch, beheizt wird. Weiterhin kann die aus dem Lüftungsgerät 4 abgeführte Abluft auch als Fortluft in die Umgebung geleitet oder zur Erwärmung anderer Einrichtungen verwendet werden.

Lüftungsvorrichtung 2 und Brauchwasser-Erwärmungseinheit 3 sind im dargestellten Ausführungsbeispiel in einem gemeinsamen Gehäuse 42 angeordnet. Es ist jedoch auch ohne weiteres möglich, hierfür getrennte Gehäuse vorzusehen.

Alternativ zu dem dargestellten Ausführungsbeispiel ist es auch möglich, die Abluft-Heizeinrichtung 5 und/oder den Filter 14 nicht außerhalb des Lüftungsgeräts 4, sondern innerhalb des Lüftungsgeräts 4 im Abluft-Eingangsabschnitt 15 anzuordnen.

## Patentansprüche

1. Warmluft-Belüftungssystem mit Wärmerückgewinnung, mit einer Lüftungsvorrichtung (2) zum Zuführen von erwärmter Zuluft zu einem Raum und zum Abführen von Abluft aus einem Raum, wobei die Lüftungsvorrichtung (2) ein Lüftungsgerät (4) mit einem Wärmetauscher (6), mit dem Wärmeenergie von der Abluft auf die Zuluft übertragbar ist, und eine Abluft-Heizeinrichtung (5) umfasst, die in Strömungsrichtung der Abluft vor dem Wärmetauscher (6) angeordnet und ausgebildet ist, die Temperatur der Abluft vor ihrem Eintritt in den Wärmetauscher (6) zu erhöhen, und wobei das Warmluft-Belüftungssystem (1) eine Brauchwasser-Erwärmungseinheit (3) mit einem Brauchwasserspeicher (26)aufweist, **dadurch gekennzeichnet, dass** die Brauchwasser-Erwärmungseinheit (3) einen Brauchwasser-Wärmetauscher (28) zur Übertragung von Wärmeenergie eines im Brauchwasserspeicher (26) vorhandenen Brauchwassers auf ein durch den Brauchwasser-Wärmetauscher (28) hindurch fließendes Fluid aufweist, wobei das erwärmte Fluid vom Brauchwasser-Wärmetauscher (28) zur Abluft-Heizeinrichtung (5) weitergeleitet wird, so dass die Abluft-Heizeinrichtung (5) mittels des erwärmten Fluids beheizbar ist.

2. Warmluft-Belüftungssystem nach Anspruch 1, **dadurch gekennzeichnet, dass** die Abluft-Heizeinrichtung (5) ein Warmwasser-Heizregister umfasst.

3. Warmluft-Belüftungssystem nach Anspruch 1 oder 2, **dadurch gekennzeichnet, dass** das Lüftungsgerät (4) ein den Wärmetauscher (6) enthaltendes Lüftungsgehäuse (7) mit einem Abluft-Eingangsanschluss (8) und einem Abluft-Ausgangsanschluss (9) aufweist, und dass die Brauchwasser-Erwärmungseinheit (3) eine Brauchwasser-Wärmepumpe umfasst, wobei die über den Abluft-Ausgangsanschluss (9) aus dem Lüftungsgerät (4) austretende Abluft zur Brauchwasser-Wärmepumpe geleitet wird, so dass der Brauchwasserspeicher (26) mittels Wärmeenergie der Abluft beheizbar ist.

4. Warmluft-Belüftungssystem nach Anspruch 3, **dadurch gekennzeichnet, dass** die Abluft-Heizeinrichtung (5) außerhalb des Lüftungsgeräts (4) angeordnet ist und einen Abluft-Ausgang (13) aufweist, der an den Abluft-Eingangsanschluss (8) des Lüftungsgeräts (4) angeschlossen ist.

5. Warmluft-Belüftungssystem nach Anspruch 3 oder 4, **dadurch gekennzeichnet, dass** die Lüftungsvorrichtung (2) ein die Temperatur der aus dem Lüftungsgerät (4) austretenden Abluft messendes Regelthermostat (32) zur Temperaturregelung des der Abluft-Heizeinrichtung (5) zugeführten Fluids aufweist, wobei das Regelthermostat (32) mit einem Mischventil (31) zum Mischen des der Abluft-Heizeinrichtung (5) zugeführten Fluids und des von der Abluft-Heizeinrichtung (5) abgeführten Fluids zusammenwirkt.

6. Warmluft-Belüftungssystem nach einem der vorhergehenden Ansprüche, **dadurch gekennzeichnet, dass** die Lüftungsvorrichtung (2) eine Frischluft-Vorheizung und ein die Temperatur der aus dem Lüftungsgerät (4) austretenden Abluft messendes Sicherheitsthermostat (40) aufweist, das die Frischluft-Vorheizung aktiviert, wenn die aus dem Lüftungsgerät (4) austretende Abluft eine Mindesttemperatur unterschreitet.

7. Warmluft-Belüftungssystem nach Anspruch 6, **dadurch gekennzeichnet, dass** die Lüftungsvorrichtung (2) eine Notausschalteinrichtung umfasst, welche einen Notausschalt-Thermostaten (41) aufweist, der die Temperatur der aus dem Lüftungsgerät (4) austretenden Abluft misst und die Lüftungsvorrichtung (2) abschaltet, wenn die aus dem Lüftungsgerät (4) austretende Abluft eine Mindesttemperatur unterschreitet und die Abluft-Heizeinrichtung (5) und/oder Frischluft-Vorheizung nicht aktiviert wird.

8. Warmluft-Belüftungssystem nach einem der Ansprüche 2 bis 7, **dadurch gekennzeichnet, dass** die Abluft-Heizeinrichtung (5), das Lüftungsgerät (4) und die Brauchwasser-Erwärmungseinheit (3) in einem gemeinsamen Gehäuse (42) angeordnet sind.

9. Warmluft-Belüftungssystem nach einem der vorhergehenden Ansprüche, **dadurch gekennzeichnet, dass** im Lüftungsgerät (4) eine Wärmepumpe angeordnet ist, die einen Verdampfer (43), einen Kompressor (44) und einen Kondensator (45) umfasst und zur Erhöhung der Temperatur der Zuluft durch Entnahme von Wärmeenergie aus der Abluft ausgebildet ist, wobei der Verdampfer (43) in Strömungsrichtung der Abluft nach dem Wärmetauscher (6) und der Kondensator (45) in Strömungsrichtung der Zuluft nach dem Wärmetauscher (6) angeordnet sind.

10. Warmluft-Belüftungssystem nach einem der vorhergehenden Ansprüche, **dadurch gekennzeichnet, dass** in Strömungsrichtung der Abluft vor der Abluft-Heizeinrichtung (5) ein Filter (14) angeordnet ist, der zur Reinigung der Abluft vor ihrem Eintritt in die Abluft-Heizeinrichtung (5) ausgebildet ist.

## Claims

1. Hot air ventilation system with heat recovery, having a ventilation device (2) for supplying heated supply air to a room and for dissipating extracted air from a room, wherein the ventilation device (2) comprises ventilation apparatus (4) having a heat exchanger (6), with which thermal energy can be transferred from the extracted air to the supply air, and an extracted air heating device (5), which is arranged in front of the heat exchanger (6) in the flow direction of the extracted air and is formed to increase the temperature of the extracted air before it enters the heat exchanger (6), and wherein the hot air ventilation system (1) has an industrial water heating unit (3) having an industrial water reservoir (26), **characterised in that** the industrial water heating unit (3) has an industrial water heat exchanger (28) for transferring thermal energy of industrial water present in the industrial water reservoir (26) to a fluid flowing through the industrial water heat exchanger (28), wherein the heated fluid is conveyed from the industrial water heat exchanger (28) to the extracted air heating device (5), such that the extracted air heating device (5) can be heated by means of the heated fluid.

2. Hot air ventilation system according to claim 1, **characterised in that** the extracted air heating device (5) comprises a hot water heating register.

3. Hot air ventilation system according to claim 1 or 2, **characterised in that** the ventilation apparatus (4) has a ventilation housing (7) containing the heat exchanger (6) with an extracted air input connection (8) and an extracted air output connection (9), and the industrial water heating unit (3) comprises an industrial water heat pump, wherein the extracted air emerging from the ventilation apparatus (4) via the extracted air output connection (9) is guided to the industrial air heat pump, such that the industrial water reservoir (26) can be heated by means of thermal energy of the extracted air.

4. Hot air ventilation system according to claim 3, **characterised in that** the extracted air heating device (5) is arranged outside the ventilation apparatus (4) and has an extracted air outlet (13), which is attached to the extracted air input connection (8) of the ventilation apparatus (4).

5. Hot air ventilation system according to claim 3 or 4, **characterised in that** the ventilation device (2) has a control thermostat (32) measuring the temperature of the extracted air emerging from the ventilation apparatus (4) for controlling the temperature of the fluid supplied to the extracted air heating device (5), wherein the control thermostat (32) interacts with a mixing valve (31) to mix the fluid supplied to the extracted air heating device (5) and the fluid dissipated by the extracted air heating device (5).

6. Hot air ventilation system according to one of the preceding claims, **characterised in that** the ventilation device (2) has a fresh air preheating and a safety thermostat (40) measuring the temperature of the extracted air emerging from the ventilation apparatus (4), said safety thermostat activating the fresh air preheating when the extracted air emerging from the ventilation device (4) does not meet a minimum temperature.

7. Hot air ventilation system according to claim 6, **characterised in that** the ventilation device (2) comprises an emergency stop device which has an emergency stop thermostat (41), which measures the temperature of the extracted air emerging from the ventilation device (4) and switches off the ventilation device (2) when the extracted air emerging from the ventilation apparatus (4) does not meet a minimum temperature and the extracted air heating device (5) and/or fresh air preheating is not activated.

8. Hot air ventilation system according to one of claims 2 to 7, **characterised in that** the extracted air heating device (5), the ventilation apparatus (4) and the industrial water heating unit (3) are arranged in a common housing (42).

9. Hot air ventilation system according to one of the preceding claims, **characterised in that** a heat pump is arranged in the ventilation apparatus (4), said heat pump comprising an evaporator (43), a compressor (44) and a capacitor (45) and being formed to increase the temperature of the supply air by removing thermal energy from the extracted air, wherein the evaporator (43) is arranged after the heat exchanger (6) in the current direction of the extracted air and the capacitor (45) is arranged after the heat exchanger (6) in the current direction of the supply air.

10. Hot air ventilation system according to one of the preceding claims, **characterised in that** a filter (14) is arranged in front of the extracted air heating device (5) in the current direction of the extracted air, said filter being formed to clean the extracted air before it enters the extracted air heating device (5).

## Revendications

1. Système de ventilation à air chaud avec récupération de chaleur, comportant un dispositif de ventilation (2) destiné à l'apport d'air, dit air introduit, chauffé dans une pièce et à l'évacuation d'air, dit air rejeté, d'une pièce ; ledit dispositif de ventilation (2) comprenant un appareil de ventilation (4) doté d'un échangeur de chaleur (6) permettant de transférer l'énergie thermique de l'air rejeté vers l'air introduit, ainsi qu'un dispositif de chauffage d'air rejeté (5) qui est disposé en amont de l'échangeur de chaleur (6), vu dans le sens de l'écoulement de l'air rejeté, et qui est conçu pour élever la température de l'air rejeté avant qu'il n'entre dans l'échangeur de chaleur (6) ; ledit système de ventilation à air chaud (1) comprenant une unité de chauffage d'eau sanitaire (3) dotée d'un réservoir d'eau sanitaire (26), **caractérisé en ce que** l'unité de chauffage d'eau sanitaire (3) comporte un échangeur de chaleur d'eau sanitaire (28) destiné au transfert de l'énergie thermique issue de l'eau sanitaire présente dans le réservoir d'eau sanitaire (26) vers un fluide circulant à travers l'échangeur de chaleur d'eau sanitaire (28), le fluide chauffé étant encore acheminé depuis l'échangeur de chaleur d'eau sanitaire (28) vers le dispositif de chauffage d'air rejeté (5) de façon à permettre le chauffage dudit dispositif de chauffage d'air rejeté (5) au moyen dudit fluide chauffé.

2. Système de ventilation à air chaud selon la revendication 1, **caractérisé en ce que** le dispositif de chauffage d'air rejeté (5) comprend un registre chauffant à eau chaude.

3. Système de ventilation à air chaud selon la revendication 1 ou 2, **caractérisé en ce que** l'appareil de ventilation (4) présente un boîtier de ventilation (7) qui contient l'échangeur de chaleur (6) et qui est doté d'un raccord d'entrée d'air rejeté (8) et d'un raccord de sortie d'air rejeté (9), et **en ce que** l'unité de chauffage d'eau sanitaire (3) comprend une pompe à chaleur d'eau sanitaire ; l'air rejeté qui sort de l'appareil de ventilation (4) en passant par le raccord de sortie d'air rejeté (9) étant dirigé vers la pompe à chaleur d'eau sanitaire, permettant au réservoir d'eau sanitaire (26) d'être chauffé au moyen de l'énergie thermique issue de l'air rejeté.

4. Système de ventilation à air chaud selon la revendication 3, **caractérisé en ce que** le dispositif de chauffage d'air rejeté (5) est disposé à l'extérieur de l'appareil de ventilation (4) et présente une sortie d'air rejeté (13) qui est reliée au raccord d'entrée d'air rejeté (8) de l'appareil de ventilation (4).

5. Système de ventilation à air chaud selon la revendication 3 ou 4, **caractérisé en ce que** le dispositif de ventilation (2) présente un thermostat de régulation (32) qui mesure la température de l'air rejeté sortant de l'appareil de ventilation (4) pour réguler la température du fluide apporté au dispositif de chauffage d'air rejeté (5), ledit thermostat de régulation (32) coopérant avec une vanne mélangeuse (31) destinée à mélanger le fluide apporté au dispositif de chauffage d'air rejeté (5) et le fluide évacué du dispositif de chauffage d'air rejeté (5).

6. Système de ventilation à air chaud selon l'une des revendications précédentes, **caractérisé en ce que** le dispositif de ventilation (2) comporte un préchauffeur d'air neuf et un thermostat de sécurité (40) qui mesure la température de l'air rejeté sortant de l'appareil de ventilation (4) et qui active le préchauffeur d'air neuf lorsque l'air rejeté sortant de l'appareil de ventilation (4) descend en dessous d'une température minimale.

7. Système de ventilation à air chaud selon la revendication 6, **caractérisé en ce que** le dispositif de ventilation (2) comprend un dispositif d'arrêt d'urgence présentant un thermostat d'arrêt d'urgence (41) qui mesure la température de l'air rejeté sortant de l'appareil de ventilation (4) et qui éteint le dispositif de ventilation (2) lorsque l'air rejeté sortant de l'appareil de ventilation (4) tombe en dessous d'une température minimale et que le dispositif de chauffage d'air rejeté (5) et/ou le préchauffeur d'air neuf ne sont pas activés.

8. Système de ventilation à air chaud selon l'une des revendications 2 à 7, **caractérisé en ce que** le dispositif de chauffage d'air rejeté (5), l'appareil de ventilation (4) et l'unité de chauffage d'eau sanitaire (3) sont disposés dans un boîtier (42) commun.

9. Système de ventilation à air chaud selon l'une des revendications précédentes, **caractérisé en ce qu'**une pompe à chaleur est disposée dans l'appareil de ventilation (4), laquelle comprend un évaporateur (43), un compresseur (44) et un condenseur (45) et est conçue pour élever la température de l'air introduit en extrayant de l'énergie thermique de l'air rejeté ; ledit évaporateur (43) étant disposé en aval de l'échangeur de chaleur (6), vu dans le sens de l'écoulement de l'air rejeté, et le condenseur (45) en aval de l'échangeur de chaleur (6), vu dans le sens de l'écoulement de l'air introduit.

10. Système de ventilation à air chaud selon l'une des revendications précédentes, **caractérisé en ce qu'**un filtre (14) est disposé en amont du dispositif de chauffage d'air rejeté (5), vu dans le sens de l'écoulement de l'air rejeté, et est conçu pour purifier l'air rejeté avant son entrée dans le dispositif de chauffage d'air rejeté (5).
